# EUROPÄISCHE PATENTANMELDUNG

(11) **EP 1 895 651 A2**
(43) Veröffentlichungstag der Anmeldung: **05.03.2008**
(21) Anmeldenummer: 07112315.2
(22) Anmeldetag: 12.07.2007
(51) Int. Cl.: H02P 7/29

(54) **Verfahren und Vorrichtung zur mehrfrequenten Ansteuerung eines Gleichstrommotors**

(30) Priorität: 30.08.2006 DE 102006040660
(71) Anmelder: ROBERT BOSCH GMBH, 70442 Stuttgart (DE)
(72) Erfinder: Huber, Siegfried, 74072, Heilbronn (DE); Kaeferstein, Berthold, 74219, Moeckmuehl (DE); Grell, Philipp, 74321, Bietigheim-Bissingen (DE); Wimmer, Markus, 74385, Pleidelsheim (DE)

(57) **Zusammenfassung**

Die vorliegende Erfindung beschreibt ein Verfahren und eine Vorrichtung zur mehrfrequenten Steuerung und/oder Regelung eines Gleichstrommotors z.B. eines Pumpenmotors in einer Bremsanlage eines Fahrzeugs. Dabei ist vorgesehen, dass der Motor mit einer festen oder variablen ersten Puls-/Pulspausen-Ansteuerung getaktet betrieben wird. Der Kern der Erfindung besteht darin, dass der Motor zusätzlich mit einer zweiten Puls-/Pulspausen-Ansteuerung betrieben wird, die der ersten Puls-/ Pulspausen-Ansteuerung überlagert ist und eine niedrigere Frequenz aufweist.

## Beschreibung

### Stand der Technik

Die Erfindung geht aus von einem Verfahren und einer Vorrichtung zur Steuerung und/oder Regelung eines Pumpenmotors in einem Fahrzeug.

Pumpenmotoren werden in Fahrzeugen üblicherweise beim Betrieb von Bremsanlagen wie Antiblockiersystemen, Antriebsschlupfregelungen, Fahrdynamikregelungen oder elektro-hydraulischen Bremssystemen eingesetzt. So wird in der DE 42 32 130 A1 eine Hydraulikpumpe zur Hilfsdruckerzeugung einer Bremsanlage mit einer Antiblockierregelung und/oder einer Antriebsschlupfregelung beschrieben, die mittels einer variablen Taktfolge aus Puls- und Pulspause angesteuert wird. Eine weitere getaktete Pumpenansteuerung ist aus der DE 198 18 174 A1 bekannt, bei der die Taktfolge in Abhängigkeit von einem Vergleich der Motorspannung mit einem Spannungsschwellenwert variiert wird.

### Vorteile der Erfindung

Die vorliegende Erfindung beschreibt ein Verfahren und eine Vorrichtung zur mehrfrequenten Steuerung und/oder Regelung eines Gleichstrommotors z.B. eines Pumpenmotors in einer Bremsanlage eines Fahrzeugs. Dabei ist vorgesehen, dass der Motor mit einer festen oder variablen ersten Puls-/Pulspausen-Ansteuerung getaktet betrieben wird. Der Kern der Erfindung besteht darin, dass der Motor zusätzlich mit einer zweiten Puls-/Pulspausen-Ansteuerung betrieben wird, die der ersten Puls-/ Pulspausen-Ansteuerung überlagert ist und eine niedrigere Frequenz aufweist.

Durch die Verwendung einer zweiten, höher getakteten Ansteuerung kann eine Optimierung der Bordnetzbelastung erreicht werden, da ein geringerer Maximalstrom zum Betrieb bzw. zum Anlauf des Pumpenmotors notwendig ist. Darüber hinaus lässt sich auch das NVH-Verhalten (Noise vibrational harshness) verbessern, das sich durch die erfindungsgemäße Anwendung in einem geringeren Geräuschpegel und einer Verbesserung der psychoakustischen Parameter widerspiegelt.

Indem die Puls-Phase der ersten Puls-/Pulspausen-Ansteuerung durch die höherfrequente Taktung ersetzt wird, wird die Größe des einzelnen Stromeintrags eines Pulses bei der Ansteuerung des Pumpenmotors reduziert. Gleichzeitig wird verhindert, dass die Stromaufnahme durch den Motor in die Begrenzung gerät, da im Vergleich zu einer konstanten Ansteuerung mehrere Pulse mit jeweils geringerer Stromhöhe verwendet werden. Insgesamt kann so ein ähnlicher Stromeintrag in den Motor erreicht werden, als wenn ein einzelner langer Puls verwendet würde.

Weiterhin kann vorgesehen sein, dass die Pulspausen der ersten Puls-/Pulspausen-Ansteuerung deutlich größer als die Pulspausen der zweiten Puls-/Pulspausen-Ansteuerung sind. Dies kann beispielsweise dadurch erreicht werden, dass die Frequenz der ersten Puls-/Pulspausen-Ansteuerung um ein ganzzahliges Vielfaches höher als die Frequenz der zweiten Puls-/Pulspausen-Ansteuerung ist.

Vorteilhafterweise wird der Pumpenmotor in der ersten Puls-/Pulspausen-Ansteuerung mit einer höherfrequenten Ansteuerung betrieben. Dabei ist beispielsweise eine Frequenz zwischen 200 Hz und 2000 Hz vorgesehen, wobei bevorzugt eine Ansteuerung mit 1000 Hz vorgesehen ist. Demgegenüber sind für die zweite Puls-/Pulspausen-Ansteuerung deutlich niedrigere Frequenzen zwischen 10 Hz und 100 Hz vorgesehen sein, wobei bevorzugt eine Ansteuerung mit 20 Hz oder 50 Hz vorgesehen ist.

In einer Weiterbildung der Erfindung ist vorgesehen, die Pumpe im Normalbetrieb mit der ersten Puls-/Pulspausen-Ansteuerung zu betreiben und die zweite Puls-/Pulspausen-Ansteuerung nur zu verwenden, wenn eine Anforderung zur Erhöhung oder Verringerung der Drehzahl des Motors vorliegt, beispielsweise im Rahmen eines Druckaufbaus oder -abbaus bei einer Bremsanforderung.

Weiterhin kann vorgesehen sein, die zweite Puls-/Pulspausen-Ansteuerung an die erste Puls-/Pulspausen-Ansteuerung anzupassen, beispielsweise nachdem die Drehzahl des Motors den geforderten Sollwert erreicht hat, ein gewünschter Druckaufbau erzielt worden ist oder eine höhere Dynamik oder ein höheres Drehmoment auf Grund höherem Druck gefordert ist. Dies kann dadurch geschehen, dass die Pulslängen der zweiten Puls-/Pulspausen-Ansteuerung stetig verlängert werden, bis im wesentlichen nur noch die ersten Puls-/Pulspausen-Ansteuerung auf den Motor wirkt. Alternativ kann auch vorgesehen sein, die Frequenz der zweiten Puls-/Pulspausen-Ansteuerung zu erhöhen, so dass ein fließender Übergang entsteht.

In einer weiteren Ausgestaltung der Erfindung ist vorgesehen, dass der Strom einer im Bordnetz des Fahrzeugs befindlichen Stromquelle erfasst wird und in Abhängigkeit des so erfassten Wertes die Ansteuerung mittels des zweiten Puls-/Pulspausenverhältnisses durchgeführt wird. Auch ist denkbar, dass die Überlagerung vorgenommen wird, wenn erfasste Geräusche oder Vibrationen einen vorbestimmten Wert überschreiten.

Ein weiterer Vorteil bei der Verwendung einer zweiten Puls-/Pulspausen-Ansteuerung liegt darin, dass die Nachlaufspannung in der nachfolgenden langen Pulspause der zweiten Puls-/Pulspausenansteuerung schneller erfasst werden kann.

Weitere Vorteile ergeben sich aus der nachfolgenden Beschreibung von Ausführungsbeispielen bzw. aus den abhängigen Patentansprüchen.

### Zeichnungen

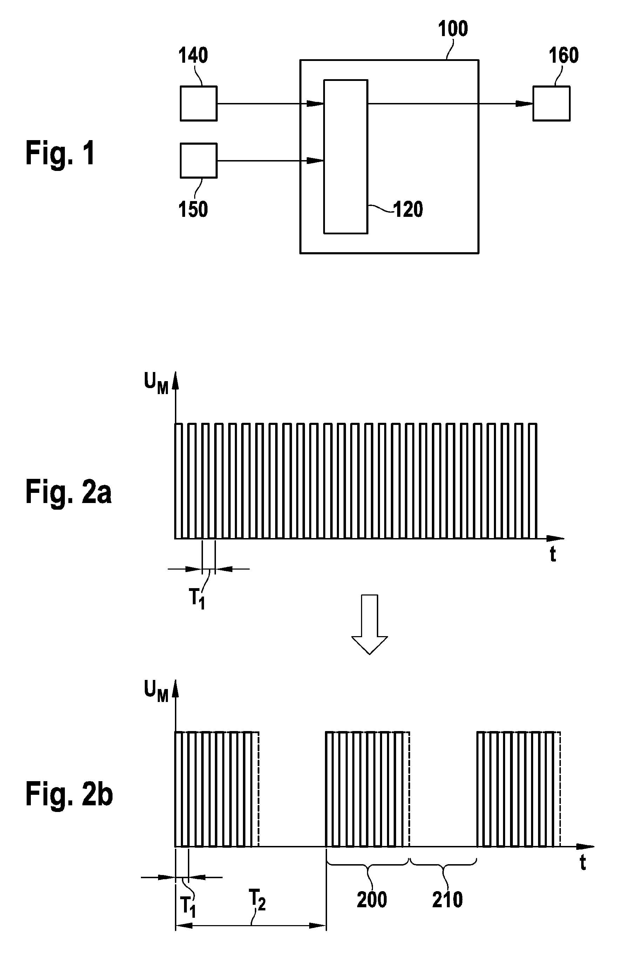

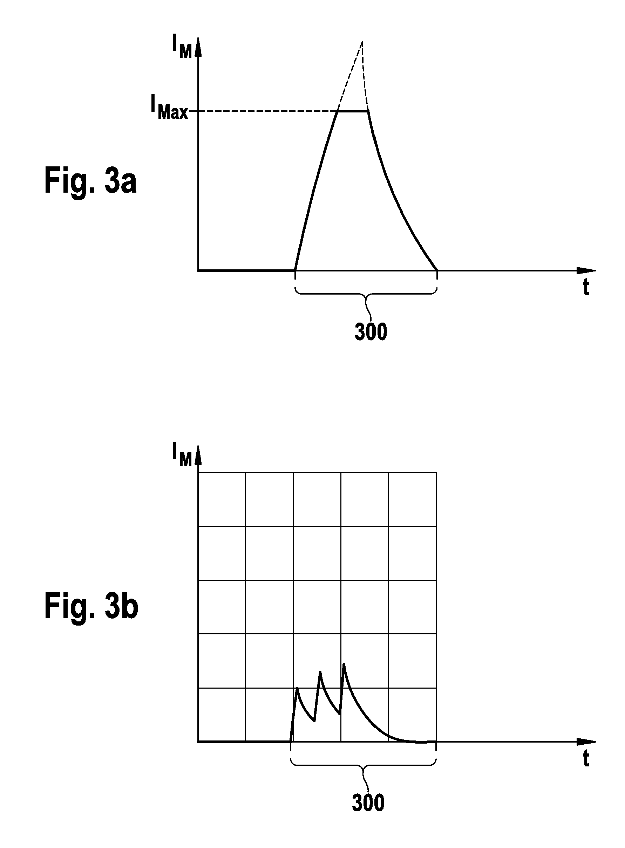

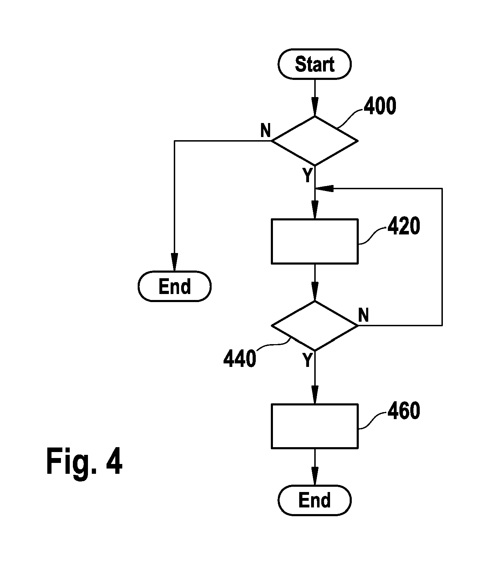

Figur 1 zeigt schematisch anhand eines Blockschaltbild eine erfindungsgemäße Vorrichtung zur Steuerung und/oder Regelung eines Generators bzw. eines Elektromotors. In den Figur 2a und 2b ist eine erfindungsgemäße Überlagerung der Ansteuerung mit zwei unterschiedlichen Taktfrequenzen der Puls-/Pulspausen-Ansteuerung dargestellt. Einen Vergleich der Auswirkung der Ansteuerung mit einem einzelnen langen Puls und mehreren kurzen Pulsen auf den durch den Motor aufgenommenen Motorstrom bei ist in den Figuren 3a und 3b gezeigt. Figur 4 stellt einen möglichen Steuerungs/Regelungsalgorithmus des Erfindungsgegenstands dar.

Ausführungsbeispiel

Beim Betrieb eines elektrisch betriebenen Pumpenmotors im Rahmen eines ABS/ESP-Bremssystems kann es während des Anlaufs aufgrund der Trägheit des Motors zu einem hohen Strombedarf kommen, der zu einem Einbruch der Bordnetzspannung führen kann. Somit steigt der an den Motor angelegte Strom beim Einschalten sehr schnell bis auf den von der Batterie lieferbaren Maximalwert an und sinkt erst mit ansteigender Drehzahl auf niedrigere Werte ab.

Ein damit verbundener Einbruch der Bordnetzspannung kann dazu führen, dass der Motor nicht schnell genug anlaufen und den Hydraulikdruck nicht schnell genug aufbauen oder in einer Blockiersituation nicht schnell genug abbauen kann.

Weiterhin führt ein langer Einschaltpuls, wie er bei niederfrequenten pulsweitenmodulierten (PWM) Ansteuerungen von 20 Hz bzw. 50 Hz auftritt, zu einem schnellen und sprunghaftem Drehzahlanstieg, der sich in einem wahrnehmbaren Geräusch äußert.

Um jedoch den Anlauf bzw. die gewünschte Drehzahlerhöhung zu erreichen, ist ein bestimmter Energieeintrag in den Motor nötig. Dieser Energieeintrag kann durch eine konstante Ansteuerung oder eine gepulste PWM Ansteuerung erfolgen. Im Gegensatz zu der üblichen niederfrequenten PWM-Ansteuerung mit 20 Hz bzw. 50 Hz ist vorgesehen, den Motor mit einer höherfrequenten PWM-Ansteuerung von ca. 1000 Hz zu betreiben. Um eine Geräuschentwicklung durch die Verwendung der höherfrequenten Ansteuerung zu vermeiden, ist daher erfindungsgemäß vorgesehen, diese höherfrequente Ansteuerung mittels der Überlagerung einer niederfrequenten Ansteuerung zu unterbrechen.

Zur Realisierung einer derartigen Ansteuerung ist eine Prozesseinheit 120 in einem Steuergerät 100 vorgesehen. Diese Prozesseinheit 120 steuert den Pumpenmotor 160 einer Bremsanlage in Abhängigkeit von intern oder extern ermittelten Parametern einer Bremsensteuerung mittels einer höherfrequenten PWM Ansteuerung. Beispielhaft sei hierbei erwähnt, dass der Strom bzw. die Spannung einer im Fahrzeug befindlichen Strom- bzw. Spannungsquelle 150 erfasst werden kann, um die erfindungsgemäße Überlagerung zu starten.

Erkennt die Prozesseinheit 120 die Anforderung eines Pumpenanlaufs, einer Erhöhung der Drehzahl des Pumpenmotors oder einer hohen Dynamik bzw. eines hohen Drehmoments, so überlagert sie der höherfrequenten PWM Ansteuerung eine weitere niederfrequente PWM Ansteuerung. Eine derartige Anforderung der Pumpenansteuerung kann beispielsweise aus einem im Steuergerät untergebrachten Antiblockierregler oder einem Fahrdynamikregler entnommen werden. Darüber hinaus ist jedoch auch möglich, die Anforderung zur Pumpenansteuerung aus einer Einheit 140 einzulesen, die diese Anforderung in Abhängigkeit des Fahrerwunsches erzeugt, z.B. in Form einer Pedalwegerfassung.

Die Überlagerung der Ansteuerung kann dabei kontinuierlich erfolgen, so dass die zweite niederfrequente Ansteuerung stetig hochgefahren wird. Alternativ kann jedoch auch direkte Überlagerung erfolgen, bei dem sofort die höherfrequente Ansteuerung vorliegt.

In den Figuren 2a und 2b ist eine Überlagerung einer Pumpenansteuerung gemäß der vorliegenden Erfindung mit zwei unterschiedlichen Frequenzen dargestellt. Dabei ist in Figur 2a zunächst die höherfrequente Ansteuerung mit der an den Motor angelegte Spannung UM im Zeitverlauf aufgetragen. Zu erkennen ist deutlich, dass die erste Puls-/Pulspausen-Ansteuerung eine Periodendauer von T₁ bzw. eine Frequenz von f₁=1/T₁ aufweist. Um den beschriebenen erfindungsgemäßen Effekt zu erzielen, ist in Figur 2b dieser ersten Puls-/Pulspausen-Ansteuerung eine niederfrequente zweite Puls-/Pulspausen-Ansteuerung mit einer Periodendauer von T₂ bzw. mit einer Frequenz von f₂=1/T₂ überlagert. Dabei ist zu erkennen, dass während der Pulsphase 200 der niederfrequenten Ansteuerung die Ansteuerung des Motors weiterhin mit der höherfrequenten Taktung erfolgt, wohingegen in der Pulspause 210 keine Ansteuerung erfolgt.

Durch die Ansteuerung des Motors mit der ersten bzw. mit der überlagerten zweiten Puls-/Pulspausenverhältnisses bzw. gepulsten höherfrequenten Taktung lässt sich der effektive Strom, der an dem Motor anliegt und die Drehzahl des Motors bestimmt, variieren.

Besonders günstig zur Vermeidung des Einbruchs der Bordnetzspannung hat sich die Verwendung einer 1000 Hz Ansteuerung gezeigt. Durch eine derartige höherfrequente Ansteuerung in Verbindung mit einer niederfrequenten Überlagerung von 20 Hz bzw. 50 Hz kann auch das NVH Verhalten verbessert werden, so dass ein geringerer Geräuschpegel im Fahrgastraum erzielt werden kann.

Die Auswirkung der erfindungsgemäßen Ansteuerung auf den Motorstrom I_{M} lässt sich anhand eines Vergleichs der normalen rein niederfrequenten Ansteuerung, wie sie in Figur 3a gezeigt wird, mit einer gepulsten höherfrequenten Ansteuerung, wie sie in Figur 3b gezeigt wird, zeigen. Dabei wird jeweils der volle Zeitraum einer einzelnen Pulsphase 300 der niederfrequenten Ansteuerung betrachtet. Während der Strom I_{M} in Figur 3a aufgrund der limitierten Energieversorgung der Bordbatterie bei Erreichen des maximal durch die Batterie lieferbaren Stromwert I_{Max} begrenzt wird, zeigt die höherfrequente Ansteuerung in Figur 3b, dass der Motorstrom I_{M} schrittweise aufgebaut wird, ohne in die Limitierung zu geraten bzw. ohne den Maximalwert einer durchgehenden Ansteuerung zu erreichen, da der Motorstrom in der höher frequenten Ansteuerung geringere Werte annimmt.

Ein möglicher Steuerungs- bzw. Regelungsalgorithmus, der das erfindungsgemäße Verfahren umsetzt, ist in Figur 4 anhand eines Flussdiagramms dargestellt. Nach dem Start des Programms wird in einem ersten Schritt 400 abgefragt, ob die Pumpe 160 in Betrieb genommen werden soll oder eine Drehzahlerhöhung erforderlich ist. Ist kein derartiger Betrieb der Pumpe vorgesehen, wird das Programm beendet oder die Pumpe allein mit einer niederfrequenten oder höherfrequenten Ansteuerung betrieben. Liegt dagegen eine Anforderung der Pumpe vor, beispielsweise im Rahmen einer Bremsanforderung mit einer niedrigen Leistungsanforderung im Rahmen einer Komfortsteuerung, wird in Schritt 420 die Pumpe mit einer höherfrequenten Ansteuerung betrieben, der eine niederfrequente Ansteuerung überlagert ist. Solange im Schritt 440 erkannt wird, dass die Zielvorgabe, die durch die Anforderung spezifiziert wird, z.B. die Solldrehzahl oder der gewünschte Solldruck, noch nicht erreicht ist, wird die niederfrequente Überlagerung der Ansteuerung fortgesetzt. Bei Erreichen der Zielvorgabe wird im Schritt 460 die niederfrequente Überlagerung abgeschalten, so dass der weitere Betrieb wieder mit der normalen bzw. höherfrequenten Ansteuerung erfolgen kann.

Alternativ kann auch vorgesehen sein, dass im Schritt 460 die niederfrequente Ansteuerung an die höherfrequente Ansteuerung angepasst wird. Dies kann beispielsweise dadurch geschehen, dass die Frequenz f₂ der niederfrequente Ansteuerung über einen vorgebbaren Zeitraum vor der Überlagerung während nachfolgender Taktzyklen erhöht wird, bis die gewünschte Frequenz f₂ der Überlagerung erreicht ist. Entsprechend kann bei einem Abschalten der Überlagerung eine stetige Verlangsamung der Frequenz f₂ bzw. eine Reduzierung der niederfrequenten Ansteuerung erfolgen, bis nur noch die höherfrequente Ansteuerung am Motor anliegt.

In einem weiteren Ausführungsbeispiel kann vorgesehen sein, dass die Strom- bzw. Spannungsquelle 150 im Fahrzeug, die den Motor mit elektrischer Energie versorgt, überwacht wird. Wird dabei festgestellt, dass die von der Strom- bzw. Spannungsquelle gelieferte Energie nicht ausreicht, um den Motor auf die gewünschte Solldrehzahl zu bringen, kann auf eine höherfrequente Ansteuerung bzw. auf Ansteuerung mit einer der höherfrequente Taktung überlagerten niederfrequenten Taktung umgeschalten werden.

In einem weiteren Ausführungsbeispiel kann eine schnellere Erfassung der Nachlaufspannung in der Pulspause 220 nach einer höher getakteten Ansteuerung während der Puls-Phase 200 erreicht werden.

## Patentansprüche

1. Verfahren zur Steuerung und/oder Regelung eines Gleichstrommotors, insbesondere eines Pumpenmotors in einem Fahrzeug, wobei vorgesehen ist, dass der Motor (160) mittels einer ersten Puls-/Pulspausen-Ansteuerung getaktet betrieben wird, **dadurch gekennzeichnet, dass** der Motor zusätzlich mit einer der ersten Puls-/Pulspausensteuerung überlagerten zweiten Puls-/Pulspausen-Ansteuerung betrieben wird, wobei das zweite Puls-/Pulspausen-Verhältnis eine niedrigere Frequenz als das erste Puls-/Pulspausen-Verhältnis aufweist.

2. Verfahren nach Anspruch 1, **dadurch gekennzeichnet, dass** die erste Puls-/Pulspausen-Ansteuerung eine Frequenz (f₂) aufweist, die ein ganzzahliges Vielfaches der Frequenz (f₁) der zweiten Puls-/Pulspausen-Ansteuerung entspricht.

3. Verfahren nach einem der vorhergehenden Ansprüche, **dadurch gekennzeichnet, dass**
- die erste Puls-/Pulspausen-Ansteuerung eine Frequenz (f₁) von 200 Hz bis 2000 Hz und/oder
- die zweite Puls-/Pulspausen-Ansteuerung eine Frequenz (f₂) von 10 Hz bis 100 Hz aufweist.

4. Verfahren nach einem der vorhergehenden Ansprüche, **dadurch gekennzeichnet, dass** die Ansteuerung des Motors (160) mit der zweiten Puls-/Pulspausen-Ansteuerung in Abhängigkeit von der Erfassung einer Anforderung zur Erhöhung oder Verringerung der Drehzahl des Motors vorgenommen wird.

5. Verfahren nach Anspruch 4, **dadurch gekennzeichnet, dass** vor oder nach der Erhöhung der Drehzahl des Motors eine stetige Anpassung der zweiten Puls-/Pulspausen-Ansteuerung an die erste Puls-/Pulspausen-Ansteuerung vorgenommen wird, wobei insbesondere vorgesehen ist, dass die Anpassung über eine Verlängerung der Pulslängen der zweiten Puls-/Pulspausen-Ansteuerung erfolgt.

6. Verfahren nach einem der vorhergehenden Ansprüche, **dadurch gekennzeichnet, dass** die Frequenz der zweiten Puls-/Pulspausen-Ansteuerung in Abhängigkeit von einer im Bordnetz des Fahrzeugs befindlichen Stromquelle (150) vorgegeben wird.

7. Vorrichtung zur Steuerung und/oder Regelung eines Gleichstrommotors, insbesondere eines Pumpenmotors in einem Fahrzeug, wobei vorgesehen ist, dass ein Steuermittel (120) vorgesehen ist, welches den Motor (160), insbesondere mit einem Verfahren nach einem der Ansprüche 1 bis 6, mittels einer ersten Puls-/Pulspausen-Ansteuerung getaktet antreibt, **dadurch gekennzeichnet, dass** das Steuermittel (120) den Motor (160) mit einer der ersten Puls-/Pulspausenansteuerung überlagerten zweiten Puls-/Pulspausen-Ansteuerung betreibt, wobei das zweite Puls-/Pulspausen-Verhältnis eine niedrigere Frequenz als das erste Puls-/Pulspausen-Verhältnis aufweist.

8. Vorrichtung nach Anspruch 7, **dadurch gekennzeichnet, dass** die erste Puls-/Pulspausen-Ansteuerung eine Frequenz (f₂) aufweist, die ein ganzzahliges Vielfaches der Frequenz (f₁) der zweiten Puls-/Pulspausen-Ansteuerung entspricht.

9. Vorrichtung nach einem Ansprüche 7 oder 8, **dadurch gekennzeichnet, dass**
- die erste Puls-/Pulspausen-Ansteuerung eine Frequenz (f₁) von 200 Hz bis 2000 Hz und/oder
- die zweite Puls-/Pulspausen-Ansteuerung eine Frequenz (f₂) von 10 Hz bis 100 Hz aufweist.

10. Vorrichtung nach einem der Ansprüche 7 bis 9, **dadurch gekennzeichnet, dass** das Steuermittel (120) die Ansteuerung des Motors (160) mit der zweiten Puls-/Pulspausen-Ansteuerung in Abhängigkeit von der Erfassung einer Anforderung zur Erhöhung oder Verringerung der Drehzahl des Motors vornimmt.

11. Vorrichtung nach Anspruch 10, **dadurch gekennzeichnet, dass** das Steuermittel nach der Erhöhung der Drehzahl des Motors eine stetige Anpassung der zweiten Puls-/Pulspausen-Ansteuerung an die erste Puls-/Pulspausen-Ansteuerung vornimmt, wobei insbesondere vorgesehen ist, dass zur Anpassung die Pulslängen der zweiten Puls-/Pulspausen-Ansteuerung verlängert werden.

12. Vorrichtung nach einem der vorhergehenden Ansprüche 7 bis 11, **dadurch gekennzeichnet, dass** das Steuermittel die Frequenz der zweiten Puls-/Pulspausen-Ansteuerung in Abhängigkeit von einer im Bordnetz des Fahrzeugs befindlichen Stromquelle (150) vorgibt.
